# EUROPEAN PATENT APPLICATION

(11) **EP 4 524 422 A1**
(43) Date of publication of application: **19.03.2025**
(21) Application number: 24167091.8
(22) Date of filing: 27.03.2024
(51) Int. Cl.: F16F 9/18, B62K 25/10, F16F 9/342, F16F 9/46, B62K 25/04

(54) **TWIN-TUBE SHOCK ABSORBER WITHOUT RESERVOIR**

(30) Priority: 15.09.2023 TW 112209992 U
(71) Applicant: Bike Pow Co.,Ltd., New Taipei City 243095 (TW)
(72) Inventor: Huang, Chih-Hang, 243095 New Taipei City (TW)
(74) Representative: Cabinet Chaillot

(57) **Abstract**

The present invention relates to a twin-tube shock absorber (1) without a reservoir, at least including an inner tube (11), an outer tube (12), a compression side mechanism (13) and a rebound side damping needle (14), where the inner tube (11) is sleeved in the outer tube (12), the compression side mechanism (13) is connected to the inner tube (11) and the outer tube (12), and the rebound side damping needle (14) extends into the inner tube (11) from one end of the inner tube (11). According to the twin-tube shock absorber (1) without the reservoir, provided by the present invention, damping oil flows into the compression side mechanism (13) through the inner tube (11), and flows into the outer tube (12) for circulation after damping is controlled through the compression side mechanism (13). According to the twin-tube shock absorber (1) without the reservoir, provided by the present invention, rebound side damping is controlled through the rebound side damping needle (14), and redundant air is gradually extruded between the inner tube (11) and the outer tube (12), so that the inner tube (11) is gradually full of the damping oil. Therefore, through the twin-tube shock absorber (1) without the reservoir, provided by the present invention, the shock absorber (1) also can adjust the compression side damping without the reservoir.

## Description

### FIELD OF THE INVENTION

The present invention relates to the field of a structure of a motorcycle shock absorber, and in particular, relates to a twin-tube shock absorber without a reservoir.

### BACKGROUND OF THE INVENTION

A motorcycle shock absorber is an apparatus for absorbing or inhibiting an impulse by utilizing the damping characteristic so as to retard mechanical vibration and consumption of kinetic energy generated during traveling of the motorcycle. A general motorcycle shock absorber can adjust a pre-compression of a spring only through a spring preload-adjustable part so as to improve the riding comfortability of the motorcycle and the supportability of the shock absorber. An advanced motorcycle shock absorber can adjust the rebound speed of the shock absorber for the rebound side of the motorcycle and the compression speed of the shock absorber for the compression side, so that the shock absorber further meets the riding habit and requirements of motorcycle driving.

However, the shock absorber capable of adjusting the compression side damping of the shock absorber in the current market are twin-tube shock absorbers with reservoirs. This shock absorber is necessarily provided with the reservoir, so that it is necessary to consider the position of the reservoir and the occupied space of the reservoir when the shock absorbing is mounted, thereby being obviously limited in real use, therefore which is not a good design.

From the above, there are still some problems in a current technology. Therefore, in view of the above problems, the inventor is eager to improve and innovate, and finally developed the twin-tube shock absorber without the reservoir after years of painstaking research.

### SUMMARY OF THE INVENTION

To solve the problems in the prior art, an objective of the present invention is to provide a twin-tube shock absorber without a reservoir, which has a simple structure and can adjust rebound side damping and compression side damping.

To achieve the above objective, the twin-tube shock absorber without the reservoir, provided by the present invention, mainly includes an inner tube, an outer tube, a compression side mechanism and an rebound side mechanism, where a storage space is formed inside the inner tube, the outer tube is sleeved outside the inner tube, and a storage chamber is arranged between the outer tube and the inner tube, the compression side mechanism is connected to the outer tube and the inner tube, and the rebound side damping needle penetrates into the inner tube from one end of the inner tube for controlling a size of the rebound side damping.

Wherein the compression side mechanism is connected to a control knob or other adjustable mechanisms.

### BRIEF DESCRIPTION OF THE DRAWINGS

FIG. 1 is a three-dimensional external view of a twin-tube shock absorber without a reservoir according to the present invention;
FIG. 2 is a three-dimensional sectional view of a twin-tube shock absorber without a reservoir according to the present invention;
FIG. 3 is a side view of a twin-tube shock absorber without a reservoir according to the present invention; and
FIG. 4 is an A_A sectional view of the twin-tube shock absorber without a reservoir in FIG. 3 according to the present invention.

### DETAILED DESCRIPTION OF PREFERRED EMBODIMENTS

To facilitate understanding of the examination committee for the technical features, contents and advantages of the present invention and the effects achieved thereby, the present invention will be described in details with reference to the accompanying drawings and attachments by means of the embodiments. The drawings used therein are only intended to illustrate and assist the specification, and may not be the true scale and precise configuration of the present invention after implementation. Therefore, the scale and configuration relationship of the accompanying drawings should not be interpreted to limit the scope of the invention in practical implementation.

In the description of this implementation, it is to be understood that the orientations or positional relationship indicated by the terms "above", "below", "left", "right", "top", "bottom", "inside", "outside" and the like are based on those of the accompanying drawings, are intended only to illustrate and simplify the description of the present invention, and not to indicate or imply that a device or an element referred to have a particular orientation and be constructed and operated in a particular orientation, and therefore shall not be construed as limiting the present invention.

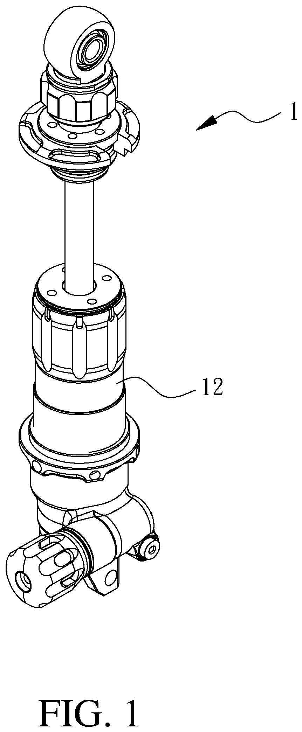

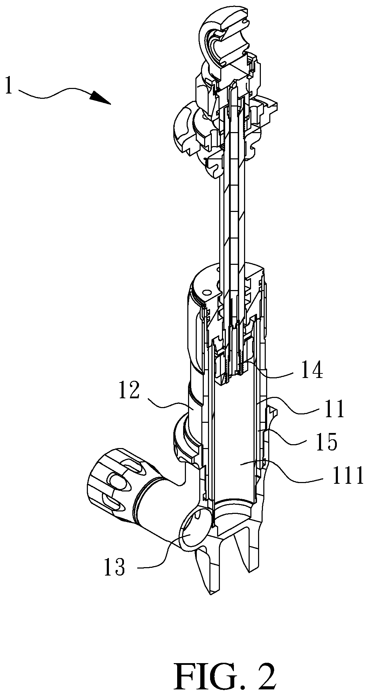

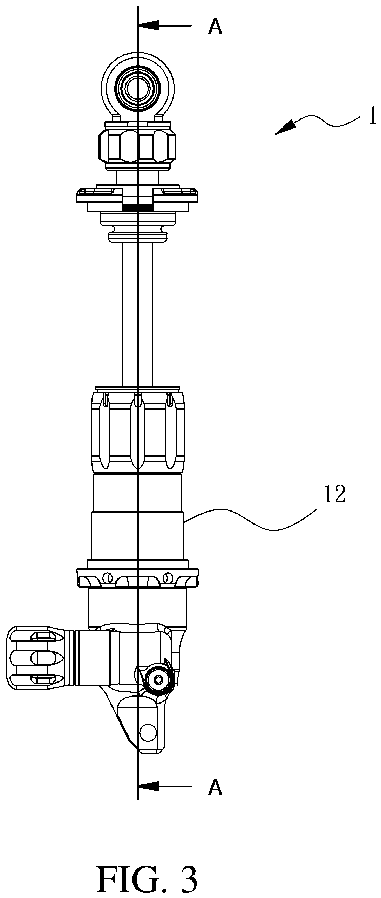

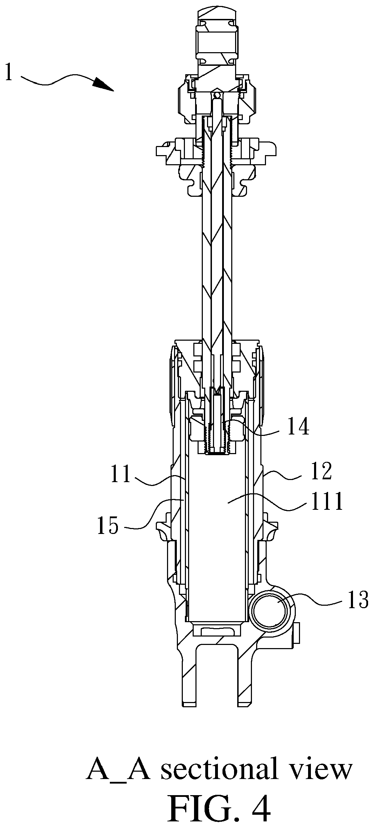

Referring to FIGS. 1-4, a twin-tube shock absorber 1 without a reservoir, provided by the present invention, at least includes an inner tube 11, an outer tube 12, a compression side mechanism 13 and an rebound side damping needle 14, where the inner tube 11 is sleeved in the outer tube 12, the compression side mechanism 13 is connected to the inner tube 11 and the outer tube 12, the rebound side damping needle 14 extends into a storage space 111 inside the inner tube 11 from one end of the inner tube 11, wherein a storage chamber 15 is formed between an outer wall of the inner tube 11 and an inner wall of the outer tube 12, and the storage space 111 communicates with the storage chamber 15 through the compression side mechanism 13.

When the twin-tube shock absorber 1 without the reservoir, provided by the present invention, is subjected to compression side adjustment, damping oil (not shown in the figure) flows into the compression side mechanism 13 through the inner tube 11, so that compression side damping is controlled through the compression side mechanism 13; and after the compression side damping is controlled by the compression side mechanism 13, the damping oil flows into the outer tube 12 through the compression side mechanism 13 for circulation. When the twin-tube shock absorber 1 without the reservoir, provided by the present invention, is subjected to rebound side adjustment, rebound side damping is controlled through the rebound side damping needle 14, redundant air is gradually extruded to the storage chamber 15 between the inner tube 11 and the outer tube 12, and an air-free state is formed in the storage space 111 of the inner tube 11, so that the storage space 111 of the inner tube 11 can be full of the damping oil.

From the above, according to the twin-tube shock absorber 1 without the reservoir, provided by the present invention, the damping oil flows into the compression side mechanism 13 through the inner tube 11, and the compression side damping is controlled by the compression side mechanism 13, so that the compressing speed of twin-tube shock absorber 1 without the reservoir, provided by the present invention, is adjusted. Therefore, compared with the prior art, the twin-tube shock absorber 1 without the reservoir, provided by the present invention, is unnecessarily provided with the reservoir. Thus, when the twin-tube shock absorber 1 without the reservoir, provided by the present invention, is mounted, it is unnecessary to consider the position of the reservoir and the occupied space of the reservoir.

The above-mentioned contents express only some of the embodiments of the present invention but are not intended to limit the scope of the present invention, a person skilled in the art shall know that several variants and improvements may be made, which all are within the scope of protection of the present invention.

### DESCRIPTION OF REFERENCE NUMBERS

1: twin-tube shock absorber without reservoir
11: inner tube
111: storage space
12: outer tube
13: compression side mechanism
14: rebound side damping needle
15: storage chamber

## Claims

1. A twin-tube shock absorber without a reservoir, at least comprising:
an inner tube, a storage space for storing damping oil is formed inside the inner tube;
an outer tube, the outer tube being sleeved outside the inner tube, and a storage chamber being arranged between the outer tube and the inner tube;
a compression side mechanism, the compression side mechanism being connected to the outer tube and the inner tube for adjusting compression side damping through the compression side mechanism after damping oil of the inner tube flows into the compression side mechanism and causing the damping oil flow into the outer tube for circulation; and
a rebound side damping needle, the rebound side damping needle penetrating into the inner tube from one end of the inner tube for controlling a size of the rebound side damping, while through adjusting the position of the rebound side damping needle in the inner tube to control a space size of the storage space.

2. The twin-tube shock absorber without a reservoir according to claim 1, wherein the compression side mechanism is connected to a control knob or other adjustable mechanisms.
